# EUROPEAN PATENT SPECIFICATION

(11) **EP 1 348 338 B1**
(45) Date of publication and mention of the grant of the patent: **01.02.2006**
(21) Application number: 03388017.0
(22) Date of filing: 21.03.2003
(51) Int. Cl.: A22C 17/00

(54) **Method and apparatus for detecting ribs in meat**
Verfahren und Vorrichtung zum Entdecken von Rippen in Fleisch
Procédé et appareil destinés a la detection des côtes

(30) Priority: 27.03.2002 DK 200200470
(43) Date of publication of application: 01.10.2003
(73) Proprietor: Slagteriernes Forskningsinstitut, 4000 Roskilde (DK)
(72) Inventor: Christensen, Flemming H., 3400 Hillerod (DK); Moller, Helge, 2920 Charlottenlund (DK)
(74) Representative: Joergensen, Bjoern Barker

(56) References cited:
- US-A- 3 777 886
- US-A- 5 847 382
- US-A- 5 902 177
- US-A1- 2002 067 797

## Description

The present invention relates to a method and an apparatus for position detection of ribs in a part of a carcass.

When slaughtering for instance pigs, the back split carcass is typically divided in three general parts, the fore-end, the middle and the ham. Most of the ribs of the pig are positioned in the front part of the middle, whereas the rear part of the middle is free of ribs. The middle can be divided into a variety of smaller cuttings, but a common and economically profitable use is spare-ribs, in which connection the ribs are cut in definite lengths. This cutting has to have comparatively accurate dimensions, as the value thereof will otherwise be reduced. It is therefore preferred to cut the ribs before freeing them from the middle. In connection with this cutting it is not desirable to cut into the meat positioned outside the area of the ribs. It is therefore important in order to be able to automate the process to know the position of the ribs, in particular that of the rear rib (the rib closest to the back end).

US-A-5 902 177 dicloses a device for detecting the pressence of bone parts in meat.

The object of the invention is therefore to provide a method and an apparatus for position detection of ribs in a part of a carcass.

The object is met by means of a method, in which a presser foot with a sliding surface and carrying a pickup member movable against a reset force and relative to the sliding surface is pressed against the surface of the carcass part by a force exceeding said reset force, in which the presser foot and the carcass part are moved relative to each other with a relative direction of movement transverse to the ribs, in which the mutual position of the presser foot and the carcass part is detected, in which the movement of the pickup member relative to the presser foot is detected and in which the two detection results are related. The pressure of the presser foot against the surface of the carcass ensures that the pickup member is kept in contact with this surface, which is a prerequisite for a correct detection. For the same reason this force has to be bigger than the reset force, but care should be taken to ensure that it is not so big that the presser foot and/or the pickup member causes damage to meat or membranes. By the movement transverse to the ribs the pickup member will alternately meet soft areas in the form of meat, membranes and other soft tissue and hard areas in the form of ribs. The ribs will move the pickup member upwards, and detection of this alternating upwards and downwards movement will give information as to the position of the ribs, when it is related to a determination of the mutual position of the presser foot and the carcass part at the time of detection.

Carcass parts do not normally have a homogenous height all over, and it is therefore preferred that the presser foot is pressed against the surface of the carcass part by a substantially constant force. Hereby is ensured that no inappropriate compression of the highest parts of the carcass part and/or that the detection does not become inaccurate on account of bad contact with the lowest part of the carcass part. Such a constant force may for instance be obtained by means of a pneumatic cylinder or a similar hydraulic device.

The most efficient and least vulnerable methods are normally the ones, in which fewest possible members to be moved relative to each other are present. It is therefore preferred that the movement of the presser foot and the carcass part relative to each other is exclusively obtained by moving the carcass part. In principle, the opposite solution could be chosen, in which the presser foot is moved relative to a stationary carcass part. This would, however, be less convenient, as transport means for transporting the carcass part along the slaughter line are normally already available.

By moving the carcass part relative to a presser foot, which is stationary in the transport direction, the position of the carcass part relative to the presser foot is in a particularly convenient manner detected thereby that a light beam or a device of another type is influenced by the front end of the carcass part and that the position of the carcass part is determined at this very moment. Combining these two determinations is simple, as only a very limited listing of the determined values has to be made.

According to the invention the presence of ribs is detected by detection of the movement of the pickup member relative to the presser foot. In a particularly advantageous embodiment this takes place thereby that a part of the pickup member or a connection member connected thereto is brought in or out of contact with an analogous or digital transducer. Hereby, an analogous or digital signal is obtained, which normally will have the form of a binary distance signal, i.e. that either there will be a signal of a certain size or no signal at all. This signal is set as a function of the distance from for instance the front end of the carcass part.

To make the method as effective as possible, it is preferred to perform only a position detection of the parts of the carcass part, which actually contain ribs. This is ensured by a method according to the invention, in which the presser foot is raised from the surface of the carcass part, if no movements of the pickup member are registered, or if the pattern of movement indicates that a detected row of ribs has now come to an end. It is particularly advantageous that the presser foot is raised from the surface, when no movement of the pickup member over a distance corresponding to approximately five times the average rib distance is registered, preferably over a distance of approximately thrice the average rib distance.

The object is further met by an apparatus having means for holding the carcass part, a presser foot with a sliding surface and carrying a pickup member movable against a reset force and relative to the sliding surface, means for registering movement of the pickup member and means for pressing the presser foot against the carcass part and for moving the presser foot and the carcass part relative to each other and for determining their mutual position. By means of this apparatus, a precise and operationally reliable detection is obtained, as it is a question of simple mechanical means, which therefore are comparatively sturdy.

The means for holding the carcass part will typically be a conveyor clamping a spinal part in the carcass part. Such means are known and provide a good and secure hold, at the same time giving good access to the parts of the carcass part to be processed. Such a conveyor may be based on a rail system, which makes it comparatively easy to determine the position of a definite carcass part.

In an advantageous embodiment the sliding surface of the presser foot is curved with a front part, seen in relation to the mutual movement of the presser foot and the carcass part, directed away from the surface of the carcass part. By giving the presser foot this shape it is ensured that the presser foot cannot bore itself into the carcass part and thus damage the meat and perhaps cause a stop of the production. In principle, it is sufficient that the front end of the presser foot, seen relative to the direction of movement, recedes upwards relative to the surface, but the presser foot may also have the shape of for instance a semicircle. It is, however, preferred that the sliding surface has a certain horizontal extension to provide a bigger contact surface with the meat thus reducing the risk of damaging the meat.

To obtain a solution which is so mechanically simple as possible and thus reliable, it is preferred that the pickup member is designed as an arm pivotally mounted in the presser foot in such a manner that one end of the arm protrudes slightly below the sliding surface of the presser foot. This embodiment also provides good possibilities for the mounting of means for establishing the reset force. Such means may for instance be a spring, but also more complicated ones may be used, for instance magnetic means.

The invention will now be described in detail in the following on the background of examples of embodiments illustrated in the annexed sketch drawings.
In the drawings
Fig. 1a is a view in vertical plane of a position detection apparatus and a carcass part, immediately prior to the position detection,
Fig. 1b a view corresponding to that of Fig. 1a after the commencement of the position detection,
Fig. 1c a view corresponding to that of Figs 1a and 1b during the position detection,
Fig. 1d a view corresponding to that of Figs 1a, 1b and 1b immediately before the end of the position detection,
Fig. 2 shows the signal resulting from the detection shown in Figs 1a-1d, and
Fig. 3 depicts a vertical sectional view of a presser foot according to the invention.

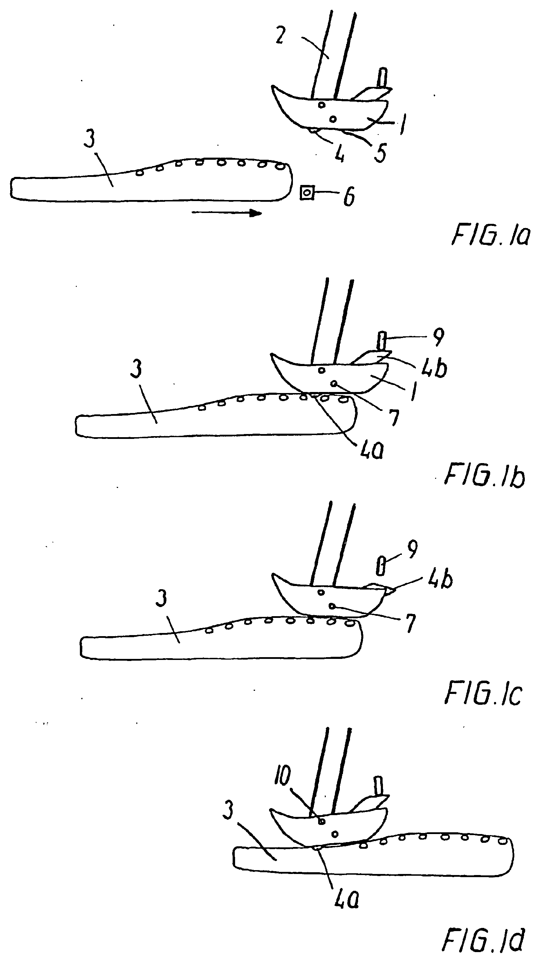

In Figs 1a-1d the method for position detection of ribs are shown in a preferred embodiment.

Fig. 1a shows a presser foot 1, which by means of an arm 2 can be pressed against a middle 3, like for instance a middle of a pig. The arm may for instance be connected with a pneumatic cylinder or a similar hydraulic means (not shown) for exertion of the pressure. In the presser foot a pickup member 4 is mounted, said pickup member protruding below a sliding surface 5 of the presser foot in such a manner that also the pickup member is brought in contact with the surface of the middle 3, when the presser foot is pressed against the surface. This does not happen until the front end of the middle has interrupted a light beam 6 by the forward movement of the middle in the direction shown by the arrow. The movement of the middle may for instance take place by means of a transport device (not shown) of the type known from EP-A2-1 059 037 clamping the spinal part of the middle.

In the situation illustrated in Fig. 1b, the detection has just started. The presser foot 1 is pressed down against the middle 3, whereby the pickup member 4 is pressed down into the meat between the second and third rib. The pickup member is here designed as an arm pivotally mounted in the point 7, where its end 4b opposite the pickup member 4a is in contact with a means 9 for detecting movements of the pickup member, for instance an analogous or digital transducer. A means (not shown) is provided in the presser foot 1 or in connection with the means 9 for detection of movements, said means (not shown) influencing the pickup member 4 by a reset force, whereby the pickup member 4a is forced down into the meat and thus kept in contact with the means for detection of movements 9. This reset means may for instance be a spring, as will be explained in detail in the following.

In respect of certain cuttings it will be sufficient to detect the position of the last rib of a row. In such cases it is not necessary to lower the presser foot down to the surface of the middle at such an early point of time as shown in Fig. 1b. It will then be advantageous to wait, so that only the last four to six ribs out of normally 10-12 in all are detected.

In Fig. 1c the middle 3 has been moved slightly further below the presser foot 1, whereby the pickup part of the pickup member 4 has been brought in over the third rib of the carcass. The rib is hard compared to the meat positioned between the ribs, and the pickup part has therefore been pressed up into the pressure foot 1 against the reset force. Hereby the pickup member 4 has turned about the fastening point 7, and the end 4b opposite the pickup part has thereby been brought out of contact with the means for detection of movements 9. When the middle 3 is moved forwards under the presser foot, the pickup member 4 will thus alternating be in and out of contact with the means for detection of movements 9. The position of the ribs in the middle 3 may then be determined thereby that the subsequent binary signal is related to the determination of the position of the middle relative to the light beam 6 and thus relative to the stationary presser foot 1.

Fig. 1d shows the situation immediately before the end of the position detection. The pickup part 4a of the pickup member 4 has now passed all ribs of the middle 3 and the presser foot 1 can be raised from the middle. In a preferred embodiment the detection is only continued until the middle 3 has been moved over a distance corresponding to twice the average rib distance of the actual type of meat without any more ribs having been detected.

In the embodiment shown in Figs 1a-1d the presser foot 1 is shown pivotally mounted about the point 10 (see Fig. 1d). This pivotal construction means that the presser foot can be tilted in such a manner that the sliding surface 5 (Fig. la) has the biggest possible contact surface with the surface of the middle 3. It is preferred that the arm 2 (Fig. 1a) is provided with means for preventing the presser foot from turning excessively. This may for instance be necessary in connection with the lowering and raising of the presser foot 1.

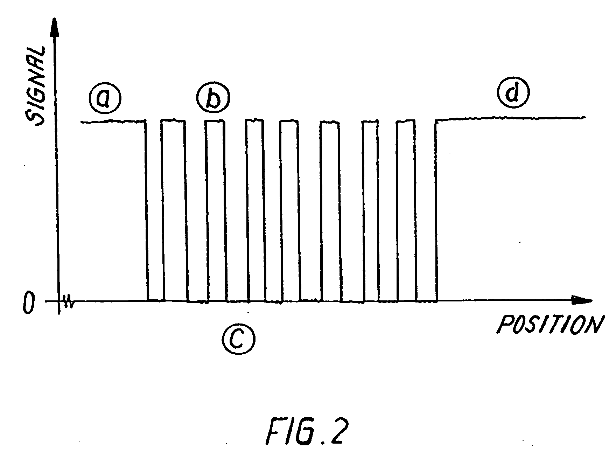

Fig. 2 shows an example of the signal obtainable by the position detection illustrated in Figs 1a-1d. The references a-d used in Fig. 2 refer to those used in Figs 1a-1d. The axis of abscissas represents the distance, which the middle 3 has moved relative to the light beam 6 or a similar position determining apparatus. The ordinate axis represents the signal detected in the means for detection of movements 9. As will be seen, it is the question of a signal, which may be designated a binary distance signal, i.e. a signal, in which the value is either 0 or 1 as a function of a distance. As is illustrated in the figure, the signal will normally emit a slight noise, but this does not change the overall picture of a binary signal.

The signal value 0 here represents the case, where the pickup part of the pickup member is above a rib and the contact to the means for detection of movements thus disconnected, i.e. the case shown in Fig. 1c and marked with a c in Fig. 2. Correspondingly, the cases shown in Figs 1a, 1b and 1d and marked by a, b and d in Fig. 2, and where the pickup part has been pressed down into the meat of the middle, give the value 1. In practice, the detected signal value will often be a value of for instance a number of volts, but as this value will be identical for all detections, the signal value 1 could be attributed thereto. It should be noted that embodiments might as well be conceived, in which the value 0 corresponds to a rib and the value 1 to a rib not being present. This might for instance be obtainable, if the means for detection of movements 9 had instead been placed under the end 4b of the pickup member opposite the pickup part.

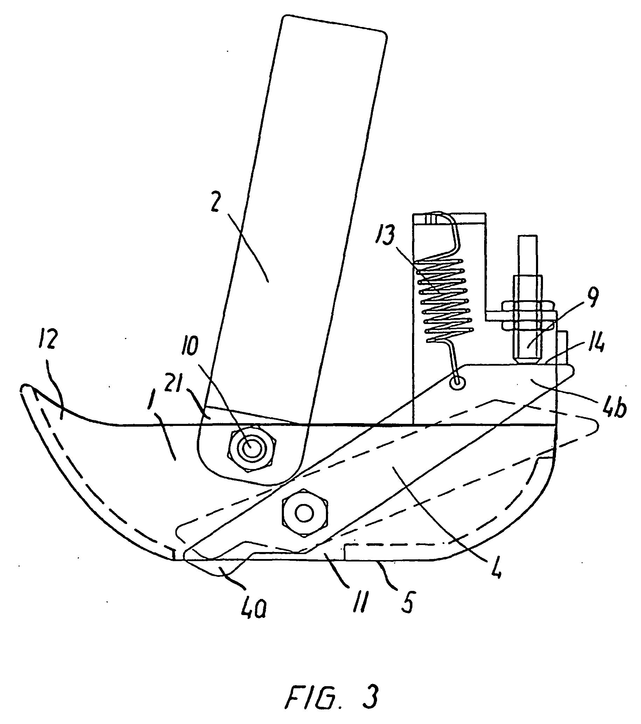

Fig. 3 shows an enlargement of the presser foot in the preferred embodiment shown in connection with Figs 1a-1d. The presser foot 1 itself has the shape of a boat, in which the sliding surface 5 has been provided with an opening 1, through which the pickup member 4 protrudes. At the front the presser foot is provided with a nose 12. This nose 12 serves the purpose of preventing the presser foot from boring itself into the middle, if it has upwardly protruding parts or if the presser foot has been turned about the point of suspension 10. Such a turning is furthermore limited by the design of the arm 2, which is fastened in the point 10 between to sheet members constituting the presser foot 1. On the part situated outside the presser foot 1 itself, the arm is wider than the distance between the two sheet members, this difference of thickness having been achieved by providing a recess 21 on both sides of the lower part of the arm. In the position shown in Fig. 3, the recesses 21 allow an upwardly directed turning of the front part of the presser foot (to the left in Fig. 3), but not an oppositely directed turning.

The pickup member 4 is pivotally fastened in the presser foot 1 in such a manner that the major part of the pickup member is situated between the two sheet members. The pickup member 4 is designed in such a manner that only a small part 4a protrudes below the sliding surface 5 of the presser foot. At the opposite end 4b the pickup member is connected to a spring 13 pulling the pickup member to force the pickup part 4a out of the opening 11 in the presser foot. Close to the fastening point of the spring the pickup member 4 is designed to contact a means for detection of movements 9, in this connection in the end surface 14 of the pickup member is substantially horizontal in its normal position.

When the pickup part 4a meets a rib and thus forces the presser foot 1 up, it will be in the position shown with dotted lines. The spring 13 is then extended, the contact between the end surface 14 of the pickup member and the means for detection of movements 9 being disconnected.

The embodiment shown in Figs 1a-1d and in Fig. 3 is not to be conceived as limiting for the invention, as variants may well be conceived. The pickup member may for instance be displaceable instead of pivotal and the reset force may be obtainable by means of a magnetic means instead of a spring.

## Claims

1. A method for position detection of ribs in a part of a carcass, **characterized in that** a presser foot with a sliding surface and carrying a pickup member movable against a reset force and relative to the sliding surface is pressed against the surface of the carcass part by a force exceeding said reset force, that the presser foot and the carcass part are moved relative to each other with a relative direction of movement transverse to the ribs, that the mutual position of the presser foot and the carcass part is detected, that movement of the pickup member relative to the presser foot is detected and that the two detection results are related.

2. A method according to claim 1, **characterized in that** the presser foot is pressed against the surface of the carcass part by a substantially constant force.

3. A method according to one of the preceding claims, **characterized in that** said movement of the presser foot and the carcass part relative to each other is established by moving the carcass part, while keeping the presser foot in a definite position relative to the direction of movement of the carcass part.

4. A method according to claim 3, **characterized in that** the position of the carcass part relative to the presser foot is detected thereby that a fixedly positioned light beam or a device of another type is influenced by the front end of the carcass part and that the position of the carcass part is determined at this very moment.

5. A method according to one of the preceding claims, **characterized in that** a movement of the pickup member relative to the presser foot is detected thereby that a part of the pickup member or a connection member connected thereto is brought in or out of contact with an analogous or digital transducer.

6. A method according to one of the preceding claims, **characterized in that** the presser foot is raised from the surface of the carcass part, if no movement of the pickup member is registered, after the presser foot and the carcass part have been moved a definite distance relative to each other.

7. A method according to claim 6, **characterized in that** the presser foot is raised from the surface, when no movement of the pickup member over a distance corresponding to approximately five times the average rib distance is registered, preferably over a distance of approximately thrice the average rib distance.

8. An apparatus for position detection of ribs in a part of a carcass (3), **characterized by** means for holding the carcass part, a presser foot (1) with a sliding surface (5) and carrying a pickup member (4) movable against a reset force and relative to the sliding surface, means for registering movement of the pickup member and means for pressing the presser foot against the carcass part and for moving the presser foot and the carcass part relative to each other and for determining their mutual position.

9. An apparatus according to claim 8, **characterized in that** the sliding surface (5) of the presser foot is curved with a front part, seen in relation to the mutual movement of the presser foot and the carcass part, directed away from the surface of the carcass part.

10. An apparatus according to claim 8 or 9, **characterized in that** the pickup member (4) is designed as an arm pivotally mounted in the presser foot in such a manner that one end of the arm protrudes slightly below the sliding surface of the presser foot.

11. An apparatus according to claim 10, **characterized in that** the reset force on the arm is effected by a spring (13).

12. An apparatus according to one of the claims 8-11, **characterized in that** the means for registering movement of the pickup member comprises an analogous or digital transducer.

13. An apparatus according to one of the claims 8 - 12, **characterized in that** the means for pressing the presser foot against the carcass part comprise a pneumatic cylinder or a similar pneumatic or hydraulic device.

14. An apparatus according to one of the claims 8 - 13, **characterized in that** the means for moving the presser foot and the carcass part relative to each other comprise a conveyor clamping a spinal column part of the carcass part.

15. An apparatus according to one of the claims 8 - 14, **characterized in that** the means for determining the position of the carcass part comprise a light beam.

## Revendications

1. Procédé de détection de position de côtes dans une partie de carcasse, **caractérisé en ce qu'**un pied presseur avec une surface coulissante, et supportant un élément capteur mobile à l'encontre d'une force de remise à zéro et par rapport à la surface coulissante, est appuyé contre la surface de la partie de carcasse sous l'effet d'une force dépassant ladite force de remise à zéro, **en ce que** le pied presseur et la partie de carcasse se déplacent l'un par rapport à l'autre avec une direction relative de déplacement transversale aux côtes, **en ce que** la partie mutuelle du pied presseur et la partie de carcasse est détectée, **en ce que** le déplacement de l'élément capteur par rapport au pied presseur est détectée et **en ce que** les deux résultats de détection sont associés.

2. Procédé selon la revendication 1, **caractérisé en ce que** le pied presseur est appuyé contre la surface de la partie de carcasse sous l'effet d'une force sensiblement constante.

3. Procédé selon l'une quelconque des revendications précédentes, **caractérisé en ce que** ledit mouvement du pied presseur et de la partie de carcasse l'un par rapport à l'autre est établi en déplaçant la partie de carcasse, tout en maintenant le pied presseur dans une position définie par rapport à la direction de déplacement de la partie de carcasse.

4. Procédé selon la revendication 3, **caractérisé en ce que** la position de la partie de carcasse par rapport au pied presseur est détectée du fait qu'un faisceau lumineux positionné de manière fixe ou un dispositif d'un autre type est influencé par l'extrémité avant de la partie de carcasse, et **en ce que** la position de la partie de carcasse est déterminée à ce moment précis.

5. Procédé selon l'une quelconque des revendications précédentes, **caractérisé en ce qu'**un déplacement de l'élément capteur par rapport au pied presseur est détecté du fait qu'une partie de l'élément capteur ou d'un élément de raccordement relié à celui-ci est mis en contact ou hors contact par rapport à un transducteur analogique ou numérique.

6. Procédé selon l'une quelconque des revendications précédentes, **caractérisé en ce que** le pied presseur est soulevé par rapport à la surface de la partie de carcasse si aucun mouvement de l'élément capteur n'est enregistré, une fois que le pied presseur et la partie de carcasse se sont déplacés sur une distance définie l'un par rapport à l'autre.

7. Procédé selon la revendication 6, **caractérisé en ce que** le pied presseur est soulevé par rapport à la surface quand aucun mouvement de l'élément capteur n'est enregistré sur une distance correspondant approximativement à cinq fois la distance de côte moyenne, de préférence sur une distance d'approximativement trois fois la distance de côte moyenne.

8. Appareil de détection de position de côtes dans une partie de carcasse (3), **caractérisé par** des moyens de maintien de la partie de carcasse, un pied presseur (1) avec une surface coulissante (5) et supportant un élément capteur (4) mobile à l'encontre d'une force de remise à zéro et par rapport à la surface coulissante, des moyens permettant d'enregistrer le déplacement de l'élément capteur et des moyens permettant d'appuyer le pied presseur contre la partie de carcasse et permettant de déplacer le pied presseur et la partie de carcasse l'un par rapport à l'autre, et de déterminer leur position mutuelle.

9. Appareil selon la revendication 8, **caractérisé en ce que** la surface coulissante (5) du pied presseur est incurvée avec une partie avant, vue par rapport au déplacement mutuel du pied presseur et de la partie de carcasse, en s'éloignant de la surface de la partie de carcasse.

10. Appareil selon l'une quelconque des revendications 8 ou 9, **caractérisé en ce que** l'élément capteur (4) est conçu comme un bras fixé de manière à pivoter dans le pied presseur, de telle sorte qu'une extrémité du bras fait légèrement saillie en dessous de la surface coulissante du pied presseur.

11. Appareil selon la revendication 10, **caractérisé en ce que** la force de remise à zéro sur le bras est exercée par un ressort (13).

12. Appareil selon l'une quelconque des revendications 8 à 11, **caractérisé en ce que** les moyens permettant d'enregistrer le déplacement de l'élément capteur comprennent un transducteur analogique ou numérique.

13. Appareil selon l'une quelconque des revendications 8 à 12, **caractérisé en ce que** les moyens permettant d'appuyer le pied presseur contre la partie de carcasse comprennent un vérin pneumatique ou un dispositif pneumatique ou hydraulique similaire.

14. Appareil selon l'une quelconque des revendications 8 à 13, **caractérisé en ce que** les moyens permettant de déplacer le pied presseur et la partie de carcasse l'un par rapport à l'autre comprennent un convoyeur serrant une partie de colonne vertébrale de la partie de carcasse.

15. Appareil selon l'une quelconque des revendications 8 à 14, **caractérisé en ce que** les moyens permettant de déterminer la position de la partie de carcasse comprennent un faisceau lumineux.

## Patentansprüche

1. Verfahren zum Erfassen von Positionen von Rippen in einem Teil einer Karkasse, **dadurch gekennzeichnet, dass** ein Druckfuß mit einer Gleitoberfläche, der ein Pickup-Element, das gegen eine Rückstellkraft und relativ zu der Gleitoberfläche bewegbar ist, trägt, gegen die Oberfläche des Karkassenteiles durch eine Kraft gedrückt wird, die die Rückstellkraft übersteigt, dass der Druckfuß und das Karkassenteil relativ zueinander mit einer relativen Bewegungsrichtung quer zu den Rippen bewegt werden, dass die gemeinsame Position des Druckfußes und des Karkassenteiles erfasst wird, dass die Bewegung des Pickup-Elementes relativ zum Druckfuß erfasst wird und dass die zwei Detektionsergebnisse miteinander in Verbindung gebracht werden.

2. Ein Verfahren gemäß Anspruch 1, **dadurch gekennzeichnet, dass** der Druckfuß gegen die Oberfläche des Karkassenteiles durch eine im wesentlichen konstante Kraft gedrückt wird.

3. Ein Verfahren gemäß einem der vorhergehenden Ansprüche, **dadurch gekennzeichnet, dass** die Bewegung des Druckfußes und des Karkassenteiles relativ zueinander durch Bewegen des Karkassenteils gebildet wird, während der Druckfuß in einer definierten Position relativ zu der Bewegungsrichtung des Karkassenteiles gehalten wird.

4. Ein Verfahren gemäß Anspruch 3, **dadurch gekennzeichnet, dass** die Position des Karkassenteiles relativ zum Druckfuß **dadurch** erfasst wird, dass ein fest positionierter Lichtstrahl oder eine Einrichtung eines anderen Typs durch das vordere Ende des Karkassenteiles beeinflusst wird und dass die Position des Karkassenteiles exakt in diesem Moment bestimmt wird.

5. Ein Verfahren gemäß einem der vorhergehenden Ansprüche, **dadurch gekennzeichnet, dass** eine Bewegung des Pickup-Elementes relativ zum Druckfuß **dadurch** erfasst wird, dass ein Teil des Pickup-Elementes oder ein mit diesem verbundenes Verbindungselement in oder außer Kontakt mit einem analogen oder digitalen Transducer gebracht wird.

6. Ein Verfahren gemäß einem der vorhergehenden Ansprüche, **dadurch gekennzeichnet, dass** der Druckfuß von der Oberfläche des Karkassenteiles angehoben wird, wenn keine Bewegung des Pickup-Elementes registriert wird, nachdem der Druckfuß und das Karkassenteil einen bestimmten Abstand relativ zueinander bewegt worden sind.

7. Ein Verfahren gemäß Anspruch 6, **dadurch gekennzeichnet, dass** der Druckfuß von der Oberfläche angehoben wird, wenn keine Bewegung des Pickup-Elementes über einen Abstand entsprechend etwa fünf Mal dem durchschnittlichen Rippenabstand registriert wird, vorzugsweise über einen Abstand von etwa dem dreifachen des durchschnittlichen Rippenabstandes.

8. Eine Vorrichtung zur Positionserfassung von Rippen in einem Teil einer Karkasse (3), **gekennzeichnet durch** Mittel zum Halten des Karkassenteiles, einen Druckfuß (1) mit einer Gleitoberfläche (5), der ein Pickup-Element (4) trägt, das gegen eine Rückstellkraft und relativ zu der Gleitoberfläche bewegbar ist, Mittel zum Registrieren der Bewegung des Pickup-Elementes und Mittel zum Drücken des Druckfußes gegen das Karkassenteil und zum Bewegen des Druckfußes und des Karkassenteiles relativ zueinander und zum Bestimmen ihrer gemeinsamen Position.

9. Eine Vorrichtung gemäß Anspruch 8, **dadurch gekennzeichnet, dass** die Gleitoberfläche (5) des Druckfußes in einem vorderen Teil gekrümmt ist, gesehen in Bezug auf die gemeinsame Bewegung des Druckfußes und des Karkassenteiles, abgewandt von der Oberfläche des Karkassenteiles.

10. Eine Vorrichtung gemäß Anspruch 8 oder 9, **dadurch gekennzeichnet, dass** das Pickup-Element (4) als ein Arm ausgebildet ist, der drehbar am Druckfuß angebracht ist, derart, dass ein Ende des Arms geringfügig unterhalb der Gleitoberfläche des Druckfußes hervorsteht.

11. Eine Vorrichtung gemäß Anspruch 10, **dadurch gekennzeichnet, dass** die Rückstellkraft auf den Arm durch eine Feder (13) bewirkt wird.

12. Eine Vorrichtung gemäß einem der Ansprüche 8 bis 11, **dadurch gekennzeichnet, dass** das Mittel zum Registrieren der Bewegung des Pickup-Elementes einen analogen oder digitalen Transducer umfasst.

13. Eine Vorrichtung gemäß einem der Ansprüche 8 bis 12, **dadurch gekennzeichnet, dass** die Mittel zum Drücken des Druckfußes gegen das Karkassenteil einen Pneumatikzylinder oder eine ähnliche pneumatische oder hydraulische Einrichtung umfassen.

14. Eine Vorrichtung gemäß einem der Ansprüche 8 bis 13, **dadurch gekennzeichnet, dass** die Mittel zum Bewegen des Druckfußes und des Karkassenteiles relativ zueinander einen Förderer umfassen, der ein Wirbelsäulenteil des Karkassenteiles klemmt.

15. Eine Vorrichtung gemäß einem der Ansprüche 8 bis 14, **dadurch gekennzeichnet, dass** die Mittel zum Bestimmen der Position des Karkassenteiles einen Lichtstrahl umfassen.
